# EUROPÄISCHE PATENTANMELDUNG

(11) **EP 1 236 631 A1**
(43) Veröffentlichungstag der Anmeldung: **04.09.2002**
(21) Anmeldenummer: 02003819.6
(22) Anmeldetag: 20.02.2002
(51) Int. Cl.: B60T 7/08

(54) **Bremsvorrichtung für ein Flurförderzeug**

(30) Priorität: 20.02.2001 DE 10108061
(71) Anmelder: STILL GMBH, D-22113 Hamburg (DE)
(72) Erfinder: Jahns, Claus-Peter, 21107 Hamburg (DE); Bavendiek, Rainer, Dr., 21465 Wentdorf (DE)
(74) Vertreter: Lang, Michael (DE)

(57) **Zusammenfassung**

Eine Bremsvorrichtung für ein Flurförderzeug ist mit einer als Federspeicherbremse ausgeführten Feststellbremse, die mittels eines Bremslüftzylinders (1) lösbar ist. Der Bremslüftzylinder (1) ist über eine Druckmittelleitung (4) mit einem Bremsdruckzylinder (5) verbunden, wobei ein Kolben des Bremsdruckzylinders (5) mittels einer von der Bedienperson erzeugbaren Kraft relativ zu einem Zylinderrohr des Bremsdruckzylinders (5) bewegbar ist. Es ist eine Betätigungsvorrichtung vorgesehen, mit der die von der Bedienperson erzeugte Kraft auf den Kolben oder auf das Zylinderrohr übertragbar ist. Die Betätigungsvorrichtung ist von einer Hebelanordnung gebildet.

## Beschreibung

Die Erfindung betrifft eine Bremsvorrichtung für ein Flurförderzeug mit einer als Federspeicherbremse ausgeführten Feststellbremse, die mittels eines Bremslüftzylinders lösbar ist.

Derartig ausgeführte Bremsvorrichtungen werden als hydraulisch lösbare Federspeicherfeststellbremsen bezeichnet. Solche Bremsen werden beispielsweise in Flurförderzeugen eingesetzt. Befindet sich das Flurförderzeug außer Betrieb oder wird ein entsprechendes Bedienelement betätigt, ist das Flurförderzeug über die Feststellbremse gebremst. Während des Betriebs des Flurförderzeugs wird mittels eines hydraulischen Zylinders durch Drucköl eine Lüftkraft erzeugt, mit der die Feststellbremse gelöst wird.

Bekannte Bremsvorrichtungen der eingangs genannten Art werden von einem Bremslüftzylinder gebildet, der mittels einer Hydraulikleitung mit einer Hydraulikanlage des Fahrzeugs verbunden ist. Die Hydraulikanlage umfasst in der Regel eine Hydraulikpumpe, eine Ventilanordnung und gegebenenfalls einen Hydraulikspeicher. Der Bremslüftzylinder kann durch entsprechendes Schalten der Ventilanordnung mit Drucköl beaufschlagt werden. Der Antrieb der Hydraulikpumpe erfolgt mittels eines Elektro- oder Verbrennungsmotors. Der Nachteil dieser bekannten Bremsvorrichtung liegt darin, dass die Feststellbremse nur dann gelöst werden kann, wenn die Hydraulikpumpe angetrieben wird oder gegebenenfalls der Druckspeicher geladen ist. Bei leerem Druckspeicher und nicht betriebsbereitem Elektro-oder Verbrennungsmotors ist kein Druck verfügbar und die Feststellbremse lässt sich nicht mehr lösen. Dies ist dann lediglich auf mechanische Art, wie z.B. durch Zerlegen oder Demontieren der Bremse, möglich. Der gleiche Fall tritt ein, wenn trotz vollem Speicher die elektrische Versorgung für das Speicherladeventil nicht gewährleistet ist.

Der Erfindung liegt daher die Aufgabe zugrunde, eine Bremsvorrichtung für ein Flurförderzeug zur Verfügung zu stellen, die ohne Fremdenergiebereitstellung betätigt werden kann und sich durch einfache Herstellbarkeit auszeichnet.

Diese Aufgabe wird erfindungsgemäß dadurch gelöst, dass der Bremslüftzylinder über eine Druckmittelleitung mit einem Bremsdruckzylinder verbunden ist, wobei ein Kolben des Bremsdruckzylinders mittels einer von der Bedienperson erzeugbaren Kraft relativ zu einem Zylinderrohr des Bremsdruckzylinders bewegbar ist. Bei dieser Anordnung kann ein ausreichender Lösedruck für die Federspeicherbremse ohne Fremdenergie hervorgerufen werden. Die Bedienperson erzeugt stattdessen den zum Lösen der Feststellbremse erforderlichen Druck per Muskelkraft, die direkt oder indirekt auf einen Bremsdruckzylinder wirkt. Mit dieser Anordnung kann die Federspeicherbremse sowohl für den Betrieb des Flurförderzeugs, als auch zur Durchführung von Wartungsarbeiten durch Muskelkraft gelöst werden.

Es ist besonders zweckdienlich, wenn der Bremslüftzylinder als hydraulischer Zylinder ausgebildet ist.

Gemäß einer anderen Ausgestaltungsform kann der Bremslüftzylinder als pneumatischer Zylinder ausgebildet werden.

Gemäß einer zweckmäßigen Weiterbildung der Erfindung ist die Bremsvorrichtung so ausgebildet, dass eine Betätigungsvorrichtung vorgesehen ist, mit der die von der Bedienperson erzeugte Kraft auf den Kolben oder auf das Zylinderrohr übertragbar ist.

Um die Anordnung möglichst einfach zu halten, wird die Betätigungsvorrichtung von einer mechanischen Anordnung gebildet.

Eine besonders zweckmäßige Ausführung wird erreicht, wenn die Betätigungsvorrichtung von einer Hebelanordnung gebildet ist. Diese Hebelanordnung kann zweckmäßigerweise auch so ausgebildet sein, dass eine weitere Kraftverstärkung durch mehrmaliges Betätigen des Hebels erreicht wird, beispielsweise mit einer Ratschenkonstruktion. Möglich ist auch der Einsatz anderer Kombinationen mit Hebeln, die zu einer Kraftverstärkung führen, beispielsweise eines Kniehebels.

Um der Bedienperson eine gewohnte Vorrichtung zur Verfügung zu stellen, ist es vorteilhaft, wenn die von einer Hebelanordnung gebildete Betätigungsvorrichtung einen Handhebel aufweist.

Gemäß einer anderen Ausgestaltungsform kann, um eine höhere Muskelkraft zur Betätigung der Hebelanordnung zu erzeugen, die Betätigungsvorrichtung als Pedal ausgebildet werden.

Nach dem Lösen der Bremse kann die Betätigungsvorrichtung durch die Bedienperson mittels der Hebelanordnung arretiert werden, so dass die Bremse während des Betriebs gelöst bleibt.

Um die Position des Bremsdruckzylinders zu definieren, wird er zweckmäßigerweise an einem Rahmenbauteil des Flurförderzeugs gelagert.

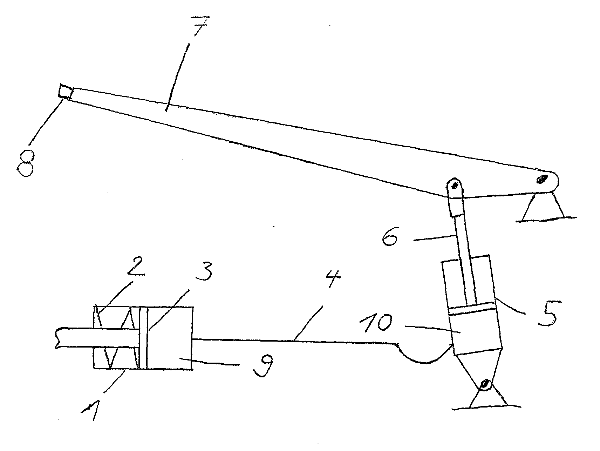

Weitere Vorteile und Einzelheiten werden anhand des in der schematischen Figur dargestellten Ausführungsbeispiels näher erläutert. Die Figur zeigt eine erfindungsgemäße Betätigungsvorrichtung.

Die Betätigungsvorrichtung weist einen Bremslüftzylinder 1 auf, der direkt auf eine, z.B. im Bereich einer Antriebsachse angeordnete Bremse wirkt. Der Bremslüftzylinder umfasst ein als Schraubenfeder ausgeführtes Federelement 2, welches auf einen ausfahrbaren Kolben 3 eine Kraft ausübt. Ein Druckraum 9 des Bremslüftzylinders 1 ist über eine Druckmittelleitung 4 an einen Bremsdruckzylinder 5 angeschlossen. Im vorliegenden Ausführungsbeispiel ist ein Handhebel 7 über einen gelenkigen Anschluss mit einer Kolbenstange 6 des Bremsdruckzylinders 5 verbunden. Über einen Arretierknopf 8 am linken Ende des Handhebels 7 kann dieser in beliebiger Stellung fixiert werden.

Um die Feststellbremse zu lüften und somit das Flurförderzeug betreiben zu können, bewegt man, ausgehend von der dargestellten Position, den Handhebel 7 nach unten. Dabei bewegt sich die Kolbenstange 6 ebenfalls nach unten und der Kolben des Bremsdruckzylinders verdrängt ein Druckmittel aus dem Druckraum 10. Aufgrund der Verbindung über die Druckmittelleitung 4 wird hierbei der Kolben 3 des Bremslüftzylinders 1 mit Druck beaufschlagt und bewegt sich nach links. Das Federelement 2 wird mit der Kraft des Zylinders zusammengedrückt und bewirkt das Lösen der Bremse.

Ist das Flurförderzeug außer Betrieb oder soll es gebremst werden, wird der Handhebel 7 nach Drücken des Arretierknopfes 8 zum oberen Anschlag hin bewegt. Die Kolbenstange 6 wird dabei ebenfalls nach oben aus dem Bremsdruckzylinder 5 gezogen. Der auf den Kolben 3 des Bremslüftzylinders 1 wirkende Druck wird dann abgebaut und der Kolben 3 wird durch das Federelement 2 nach rechts bewegt. Somit wird die Feststellbremse mittels der Kraft des Federelements 2 zum Eingreifen gebracht.

## Patentansprüche

1. Bremsvorrichtung für ein Flurförderzeug mit einer als Federspeicherbremse ausgeführten Feststellbremse, die mittels eines Bremslüftzylinders (1) lösbar ist, **dadurch gekennzeichnet, dass** der Bremslüftzylinder (1) über eine Druckmittelleitung (4) mit einem Bremsdruckzylinder (5) verbunden ist, wobei ein Kolben des Bremsdruckzylinders (5) mittels einer von der Bedienperson erzeugbaren Kraft relativ zu einem Zylinderrohr des Bremsdruckzylinders (5) bewegbar ist.

2. Bremsvorrichtung nach Anspruch 1, **dadurch gekennzeichnet, dass** der Bremslüftzylinder (1) als hydraulischer Zylinder ausgebildet ist.

3. Bremsvorrichtung nach Anspruch 1, **dadurch gekennzeichnet, dass** der Bremslüftzylinder (1) als pneumatischer Zylinder ausgebildet ist.

4. Bremsvorrichtung nach Anspruch 1, **dadurch gekennzeichnet, dass** eine Betätigungsvorrichtung vorgesehen ist, mit der die von der Bedienperson erzeugte Kraft auf den Kolben oder auf das Zylinderrohr übertragbar ist.

5. Bremsvorrichtung nach Anspruch 1 oder 4, **dadurch gekennzeichnet, dass** die Betätigungsvorrichtung von einer mechanischen Anordnung gebildet ist.

6. Bremsvorrichtung nach Anspruch 4 oder 5, **dadurch gekennzeichnet, dass** die Betätigungsvorrichtung von einer Hebelanordnung gebildet ist.

7. Bremsvorrichtung nach einem der Ansprüche 2 bis 6, **dadurch gekennzeichnet, dass** die Betätigungsvorrichtung einen Handhebel (7) aufweist.

8. Bremsvorrichtung nach einem der Ansprüche 2 bis 6, **dadurch gekennzeichnet, dass** die Betätigungsvorrichtung ein Pedal aufweist.

9. Bremsvorrichtung nach einem der Ansprüche 2 bis 6, **dadurch gekennzeichnet, dass** die Betätigungsvorrichtung arretierbar ist.

10. Bremsvorrichtung nach einem der Ansprüche 1 bis 9, **dadurch gekennzeichnet, dass** der Bremsdruckzylinder (5) gelenkig an einem Rahmenbauteil des Flurförderzeugs gelagert ist.
